# EUROPÄISCHE PATENTSCHRIFT

(11) **EP 2 651 716 B1**
(45) Veröffentlichungstag und Bekanntmachung des Hinweises auf die Patenterteilung: **04.03.2020**
(21) Anmeldenummer: 11779410.7
(22) Anmeldetag: 08.11.2011
(51) Int. Cl.: B60S 1/40, B60S 1/38

(54) **WISCHBLATTVORRICHTUNG**
WIPERBLADE
BALAI D'ESSUIE GLACE

(30) Priorität: 13.12.2010 DE 102010062910
(43) Veröffentlichungstag der Anmeldung: 23.10.2013
(73) Patentinhaber: Robert Bosch GmbH, 70442 Stuttgart (DE)
(72) Erfinder: HERINCKX, Dirk, B-3350 Linter (BE); DEPONDT, Helmut, B-3010 Kessel-Lo (BE); BEX, Koen, B-3890 Jeuk (BE)
(86) Internationale Anmeldenummer: PCT/EP2011/069586
(87) Internationale Veröffentlichungsnummer: WO 2012/079848

(56) Entgegenhaltungen:
- EP-A1- 2 008 891
- WO-A1-2008/076402
- DE-A1- 10 036 135
- DE-A1-102006 038 828
- FR-A1- 2 915 445
- US-A1- 2008 289 133

## Beschreibung

### Stand der Technik

Die Erfindung geht aus von einer Wischblattvorrichtung nach dem Oberbegriff des Patentanspruchs 1.

Es ist bereits eine Wischblattvorrichtung mit einem Wischblattadapter und einer Wischleisteneinheit bekannt.
Aus der US2008/289,133 A1 ist eine Wischblattvorrichtung mit den Merkmalen des Oberbegriffs bekannt. Weiterer Stand der Technik ist aus der FR 2 915 445 A1 und aus der DE 10 2006 038 828 A1 bekannt.

### Offenbarung der Erfindung

Die Erfindung geht aus, von einer Wischblattvorrichtung mit einem Wischblattadapter und einer Wischleisteneinheit.

Es wird vorgeschlagen, dass die Wischleisteneinheit zumindest eine Befestigungsausnehmung aufweist, die in zumindest einem Betriebszustand einen Formschluss mit dem Wischblattadapter bildet, wodurch der Wischblattadapter besonders schnell mit dem Windabweiserelement montiert werden kann. Unter einem "Wischblattadapter" soll in diesem Zusammenhang insbesondere ein Adapter verstanden werden, der dazu vorgesehen ist, einen Kopplungsbereich der Wischblattvorrichtung für eine Kopplung mit einem Wischarm bereitzustellen. Unter einer "Wischleisteneinheit" soll dabei in diesem Zusammenhang insbesondere eine Einheit verstanden werden, die dazu vorgesehen ist, einen Wischblattadapter mit einer Wischlippe zu verbinden. Unter "vorgesehen" soll insbesondere speziell ausgelegt und/oder ausgestattet verstanden werden. Dadurch kann der Wischblattadapter besonders kostengünstig und stabil an der Wischleisteneinheit montiert werden.

Ferner wird vorgeschlagen, dass der Wischblattadapter zumindest ein Befestigungsmittel aufweist, das in zumindest einem Betriebszustand einen Formschluss mit einem Windabweiserelement der Wischleisteneinheit bildet und eine Bewegung der Wischleisteneinheit relativ zum Wischblattadapter in einer Längsrichtung vermeidet, wodurch eine besonders sichere Montage der Wischblattvorrichtung erreicht werden kann. Unter einem "Windabweiserelement" soll in diesem Zusammenhang insbesondere ein Element verstanden werden, das dazu vorgesehen ist, einen auf die Wischblattvorrichtung wirkenden Fahrtwind abzuweisen und/oder für ein Anpressen der Wischlippe auf eine Fahrzeugscheibe zu nutzen. Bevorzugt weist das Windabweiserelement zumindest eine konkave Fläche auf. Unter einer "Längsrichtung" soll in diesem Zusammenhang insbesondere eine Richtung verstanden werden, die sich im Wesentlichen parallel zu einer Längserstreckung des Trägerelements erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden.

Weist die Wischleisteneinheit zumindest ein federelastisches Trägerelement auf, das in zumindest einem Betriebszustand einen Formschluss mit dem Wischblattadapter bildet, kann der Wischblattadapter sicher an der Wischleisteneinheit gehalten werden. Unter einem "federelastischen Trägerelement" soll in diesem Zusammenhang insbesondere ein Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegenwirkt.
Vermeidet der Formschluss zwischen dem Trägerelement und dem Wischblattadapter eine Bewegung des Trägerelements relativ zum Wischblattadapter in Längsrichtung, kann der Wischblattadapter besonders sicher an der Wischleisteneinheit gehalten werden.
Eine besonders einfache Montage der Wischblattvorrichtung kann erreicht werden, wenn das Trägerelement zumindest ein Rastmittel aufweist, das in zumindest einem Betriebszustand eine Rastverbindung mit dem Wischblattadapter bildet. Unter einem "Rastmittel" soll in diesem Zusammenhang insbesondere ein Mittel verstanden werden, das dazu vorgesehen ist, eine Rastverbindung mit einem federelastischen Bauteil herzustellen, das zur Montage ausgelenkt wird. Bevorzugt ist das Rastmittel als Rastausnehmung ausgebildet.
Weist die Wischleisteneinheit ein Windabweiserelement und eine Wischlippe auf, die einstückig ausgebildet sind, kann eine besonders haltbare und kostengünstige Verbindung zwischen der Wischlippe und dem Windabweiserelement hergestellt werden. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Der Wischblattadapter weist eine Längsführungseinheit auf, die dazu vorgesehen ist, ein Trägerelement formschlüssig aufzunehmen, wodurch eine besonders sichere Aufnahme des Trägerelements erzielt werden kann. Unter einer "Längsführungseinheit" soll in diesem Zusammenhang insbesondere eine Einheit verstanden werden, die dazu vorgesehen ist, eine Führung eines Trägerelements in Längsrichtung bereitzustellen. Bevorzugt weist die Längsführungseinheit zumindest eine sich in Längsrichtung erstreckende Führungsnut auf, die dazu vorgesehen ist, einen Formschluss mit der Trägereinheit zu bilden.

Ferner wird vorgeschlagen, dass die Wischleisteneinheit einen Längsführungskanal aufweist, der dazu vorgesehen ist, ein Trägerelement formschlüssig aufzunehmen, wodurch eine besonders platzsparende und sichere Montage der Wischblattvorrichtung erreicht werden kann. Unter einem "Längsführungskanal" soll in diesem Zusammenhang insbesondere ein Führungskanal verstanden werden, der sich in montiertem Zustand in einer Haupterstreckungsrichtung parallel zur Längsrichtung erstreckt.

Wird der Wischblattadapter auf die Wischleisteneinheit gesetzt, wobei zumindest ein Befestigungsmittel formschlüssig in die Befestigungsausnehmung eingreift, kann eine Montage besonders schnell erfolgen.

Wird nach einem Aufsetzen des Wischblattadapters auf die Wischleisteneinheit ein Trägerelement in die Wischleisteneinheit und in eine Längsführungseinheit des Wischblattadapters eingeschoben, kann eine besonders hohe Stabilität des Wischblattadapters erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Wischblattvorrichtung in einem montierten Zustand,
- Fig. 2: eine perspektivische Ansicht einer Wischleisteneinheit der Wischblattvorrichtung nach Figur 1,
- Fig. 3: eine Schnittdarstellung durch die Wischleisteneinheit nach Figur 2,
- Fig. 4: eine perspektivische Ansicht eines Wischblattadapteraufnahmebereichs der Wischleisteneinheit nach Figur 2,
- Fig. 5: eine perspektivische Ansicht eines Wischblattadapters der Wischblattvorrichtung nach Figur 1,
- Fig. 6: eine perspektivische Ansicht eines Trägerelements der Wischblattvorrichtung nach Figur 1,
- Fig. 7: eine Draufsicht auf einen Ausschnitt des Trägerelements nach Figur 6,
- Fig. 8: eine perspektivische Ansicht der Wischblattvorrichtung nach Figur 1 in einem ersten Montageschritt,
- Fig. 9: eine perspektivische Ansicht der Wischblattvorrichtung nach Figur 1 in einem zweiten Montageschritt und
- Fig. 10: eine perspektivische Ansicht der Wischblattvorrichtung nach Figur 1 in einem dritten Montageschritt.

### Beschreibung des Ausführungsbeispiels

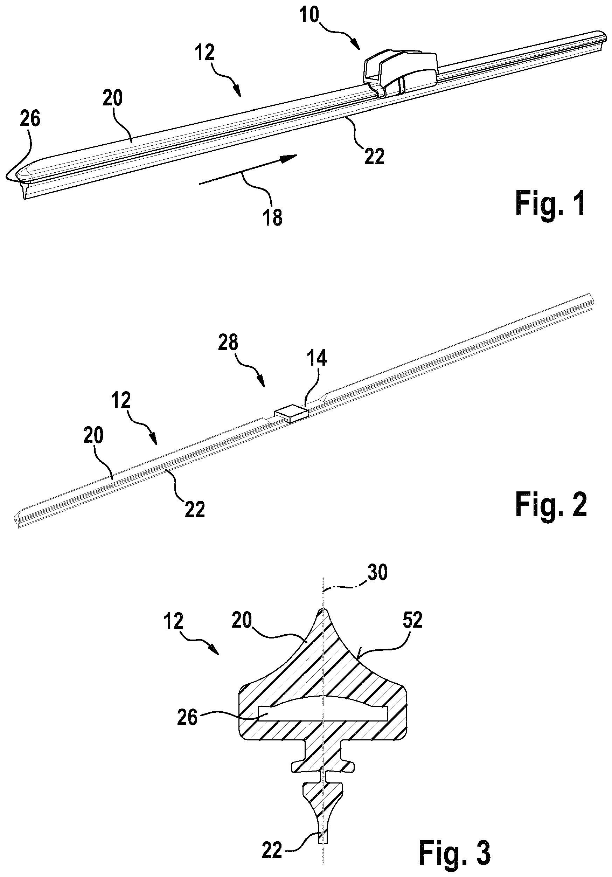

Figur 1 zeigt eine perspektivische Ansicht einer erfindungsgemäßen Wischblattvorrichtung mit einem Wischblattadapter 10 und einer Wischleisteneinheit 12 in einem montierten Zustand. Die Wischleisteneinheit 12 weist ein Windabweiserelement 20 und eine Wischlippe 22 auf, die einstückig ausgebildet sind. Entlang einer Längsrichtung 18, die parallel zu einer Längserstreckung der Wischleisteneinheit 12 angeordnet ist, erstreckt sich ein Längsführungskanal 26 innerhalb der Wischleisteneinheit 12. Der Längsführungskanal 26 ist in Längsrichtung 18 beidseitig geöffnet.

In Figur 2 ist eine erfindungsgemäße Wischleisteneinheit 12 dargestellt. In einem Wischblattadapteraufnahmebereich 28, der sich, in Längsrichtung 18 betrachtet, von 45% bis 55% der Längserstreckung der Wischleisteneinheit 12 erstreckt, weist das Windabweiserelement 20 eine Befestigungsausnehmung 14 auf. Es ist in diesem Zusammenhang jedoch auch denkbar, die Befestigungsausnehmung 14 außerhalb des Wischblattadapteraufnahmebereichs 28 und somit, in Längsrichtung 18 betrachtet, asymmetrisch an der Wischleisteneinheit 12 anzuordnen. Das Windabweiserelement 20 ist an jedem freien Ende zur Wischlippe 22 hin durch einen Schnitt abgerundet. Ein Einsatz von zusätzlichen Endkappen zur optischen Verbesserung kann dadurch vermieden werden.

Das gezeigte Windabweiserelement 20 und die Wischlippe 22 sind in einem Mehrkomponenten-Spritzverfahren hergestellt. In diesem Zusammenhang sind auch andere, dem Fachmann als sinnvoll erscheinende Fertigungsverfahren denkbar, wie insbesondere andere Spritzgussverfahren, Klebeverfahren und/oder Schweißverfahren, die zumindest zu einer stoffschlüssigen Verbindung zwischen dem Windabweiserelement 20 und der Wischlippe 22 führen.

Ein Schnitt durch die Wischleisteneinheit 12 ist in Figur 3 dargestellt und zeigt das Windabweiserelement 20, die Wischlippe 22 und den Längsführungskanal 26. Die Wischleisteneinheit 12 weist eine Symmetrieebene 30 auf, die sich entlang der Längsrichtung 18 erstreckt. Das Windabweiserelement 20 weist seitlich angeordnete konvexe Windabweisflächen 52 auf, die einen Fahrtwind abweisen und für ein Anliegen der Wischlippe 22 an einer Windschutzscheibe (nicht dargestellt) bei hohen Geschwindigkeiten sorgen.

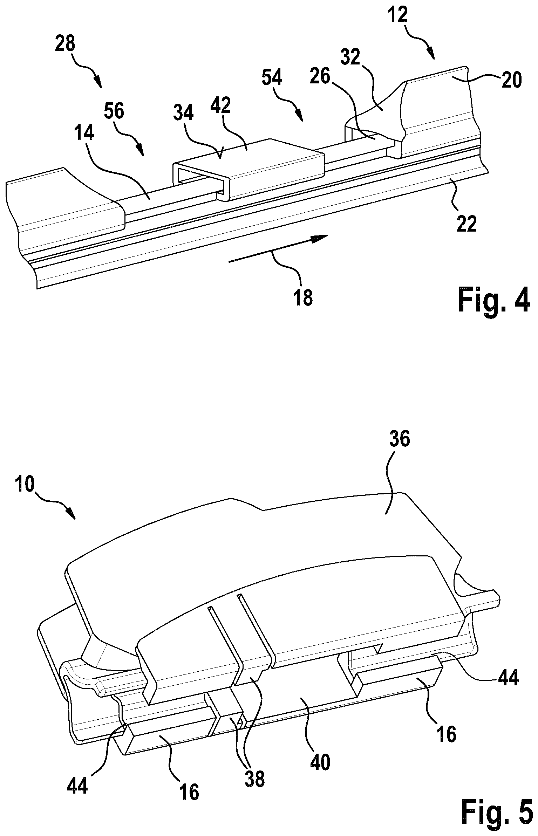

Figur 4 zeigt den Wischblattadapteraufnahmebereich 28 der Wischleisteneinheit 12 in einer perspektivischen Ansicht. Die Befestigungsausnehmung 14 grenzt an zwei Seitenwandungen 32 des Windabweiserelements 20 an und weist eine Auflagefläche 34 auf. Die Seitenwandungen 32 schließen zur Längsrichtung 18 einen Winkel von 45° ein. Es ist in diesem Zusammenhang jedoch auch denkbar, andere, dem Fachmann als sinnvoll erscheinende Winkelgrößen zwischen den Seitenwandungen 32 und der Längsrichtung 18 zu verwenden, wie beispielsweise 60°. Zueinander schließen die Seitenwandungen 32 daher einen Winkel von 90° ein. Die Auflagefläche 34 befindet sich auf einem Auflagekörper 42, der zentral in der Befestigungsausnehmung 14 angeordnet ist.

An den Seitenwandungen 32 ist der Längsführungskanal 26 der Wischleisteneinheit 12 geöffnet. Der Auflagekörper 42 setzt den Längsführungskanal 26 innerhalb des Wischblattadapteraufnahmebereichs 28 fort. In Längsrichtung 18 betrachtet ist der Längsführungskanal 26 daher in zwei Bereichen 54, 56 unterbrochen.

Der Wischblattadapter 10 ist in Figur 5 in einer perspektivischen Ansicht gezeigt. Der Wischblattadapter 10 weist einen Grundkörper 36 auf, an dem zwei Befestigungsmittel 16 angeformt sind. Die Befestigungsmittel 16 grenzen an eine Zentralausnehmung 40 des Grundkörpers 36 an. Ferner sind am Grundkörper 36 zwei auslenkbare Rasthaken 38 angeordnet. Die Rasthaken 38 lassen sich quer zur Längsrichtung 18 auslenken. Die Zentralausnehmung 40 bildet in einem montierten Zustand einen Formschluss mit dem Auflagekörper 42. Der Wischblattadapter 10 weist ferner eine Längsführungseinheit 24 auf, welche vier Führungsnuten 44 umfasst. Die Führungsnuten 44 erstrecken sich parallel zur Längsrichtung 18 und sind zueinander hin geöffnet. Ferner grenzen die Führungsnuten 44 an die Zentralausnehmung 40 an.

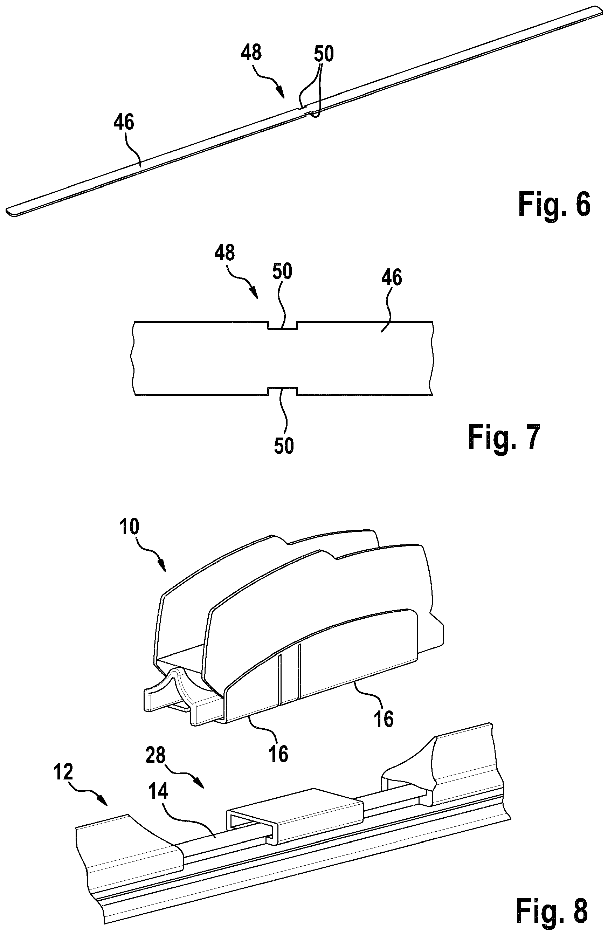

Figur 6 zeigt ein federelastisches Trägerelement 46 der Wischleisteneinheit 12. Das Trägerelement 46 besteht aus einem Federstahl und weist ein mittig angeordnetes Rastmittel 48 auf, das zwei Rastausnehmungen 50 umfasst. Die Rastausnehmungen 50 werden aus dem Federstahl ausgestanzt und weisen ein rechteckiges Profil auf, wie in Figur 7 in einer Draufsicht dargestellt. Die Rastausnehmungen 50 sind, in Längsrichtung 18 betrachtet, in gleicher Position angeordnet. Ferner weist das Trägerelement 46 eine Dicke auf, die einer Breite der Führungsnuten 44 entspricht.

In Figur 8 ist ein erster Montageschritt der Wischblattvorrichtung dargestellt. Der Wischblattadapter 10 ist oberhalb des Wischblattadapteraufnahmebereichs 28 der Wischleisteneinheit 12 angeordnet. Wird der Wischblattadapter 10 auf die Wischleisteneinheit 12 gesetzt, greift das Befestigungsmittel 16 des Wischblattadapters 10 formschlüssig in die Befestigungsausnehmung 14 der Wischleisteneinheit 12 ein. In den Bereichen 54, 56 der Wischleisteneinheit 12 ist nun die Längsführungseinheit 24 angeordnet. Der Wischblattadapter 10 bildet mit der Wischleisteneinheit 12 einen Formschluss. Eine Bewegung der Wischleisteneinheit 12 relativ zum Wischblattadapter 10 ist in Längsrichtung 18 vermieden.

In einem zweiten Montageschritt wird das Trägerelement 46 in den Längsführungskanal 26 der Wischleisteneinheit 12 eingeführt. Im Wischblattadapteraufnahmebereich 28 tritt das Trägerelement 46 aus dem Längsführungskanal 26 in den Bereich 54 und wird anschließend in die Führungsnut 44 der Längsführungseinheit 24 des Wischblattadapters 10 geführt.

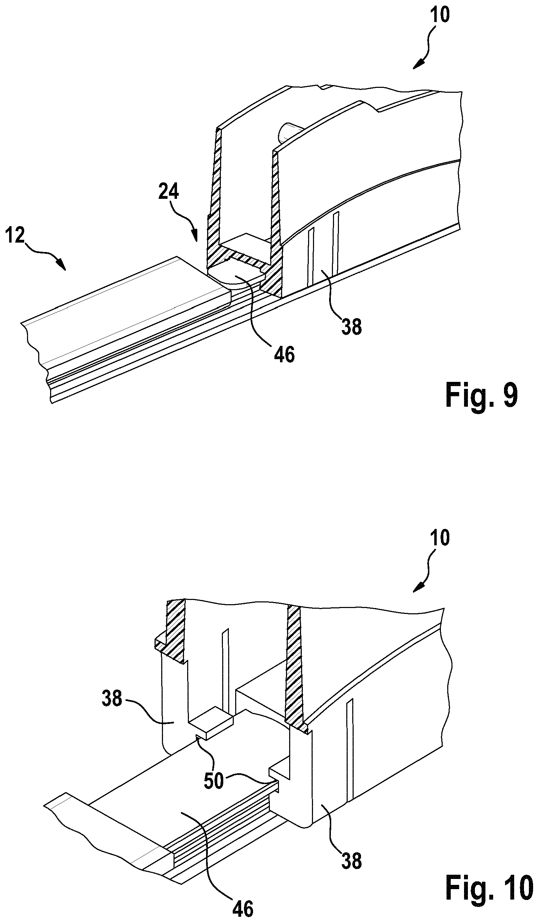

Figur 9 zeigt das Trägerelement 46, das komplett durch die Längsführungseinheit 24 geschoben ist. Das Trägerelement 46 bildet einen Formschluss mit dem Wischblattadapter 10. Der Wischblattadapter 10 kann somit nicht mehr von der Wischleisteneinheit 12 gelöst werden, sondern ist fest mit dieser verbunden.

Das Trägerelement 46 wird in einem dritten Montageschritt weiter geschoben, bis die Rasthaken 38 des Wischblattadapters 10 in die Rastausnehmungen 50 des Trägerelements 46 eingreifen und eine Rastverbindung eingehen, wie in Figur 10 dargestellt.

Die Rasthaken 38 werden dabei zunächst aus einer Ausgangslage quer zur Längsrichtung 18 ausgelenkt und bewegen sich dann elastisch zurück in die Ausgangslage. Dadurch wird ein Formschluss mit den Rastausnehmungen 50 gebildet und eine Bewegung des Trägerelements 46 relativ zum Wischblattadapter 10 in Längsrichtung 18 vermieden.

Durch das Weiterschieben des Trägerelements 46, tritt dieses wieder in den Längsführungskanal 26 der Wischleisteneinheit 12 ein und bildet mit diesem einen Formschluss. Eine Bewegung des Trägerelements 46 innerhalb des Längsführungskanals 26 ist in jeglicher Richtung vermieden.

## Patentansprüche

1. Wischblattvorrichtung mit einem Wischblattadapter (10) und einer Wischleisteneinheit (12), wobei die Wischleisteneinheit (12) zumindest eine Befestigungsausnehmung (14) aufweist, die in zumindest einem Betriebszustand einen Formschluss mit dem Wischblattadapter (10) bildet mit einen Auflagekörper (42), der zentral in der Befestigungsausnehmung (14) angeordnet ist und in einem montierten Zustand einen Formschluss mit einer Zentralausnehmung (40) des Wischblattadapters (10) bildet, **dadurch gekennzeichnet, dass** der Wischblattadapter (10) eine Längsführungseinheit (24) aufweist, die dazu vorgesehen ist, ein Trägerelement (46) formschlüssig aufzunehmen.

2. Wischblattvorrichtung nach Anspruch 1, **dadurch gekennzeichnet, dass** der Wischblattadapter (10) zumindest ein Befestigungsmittel (16) aufweist, das in zumindest einem Betriebszustand einen Formschluss mit einem Windabweiserelement (20) der Wischleisteneinheit (12) bildet und eine Bewegung der Wischleisteneinheit (12) relativ zum Wischblattadapter (10) in einer Längsrichtung (18) vermeidet.

3. Wischblattvorrichtung nach Anspruch 1 oder 2, **dadurch gekennzeichnet, dass** die Wischleisteneinheit (12) zumindest ein federelastisches Trägerelement (46) aufweist, das in zumindest einem Betriebszustand einen Formschluss mit dem Wischblattadapter (10) bildet.

4. Wischblattvorrichtung nach Anspruch 3, **dadurch gekennzeichnet, dass** der Formschluss zwischen dem Trägerelement (46) und dem Wischblattadapter (10) eine Bewegung des Trägerelements (46) relativ zum Wischblattadapter (10) in Längsrichtung (18) vermeidet.

5. Wischblattvorrichtung nach Anspruch 4, **dadurch gekennzeichnet, dass** das Trägerelement (46) zumindest ein Rastmittel (48) aufweist, das in zumindest einem Betriebszustand eine Rastverbindung mit dem Wischblattadapter (10) bildet.

6. Wischblattvorrichtung nach einem der vorhergehenden Ansprüche, **dadurch gekennzeichnet, dass** die Wischleisteneinheit (12) ein Windabweiserelement (20) und eine Wischlippe (22) aufweist, die einstückig ausgebildet sind.

## Claims

1. Wiper blade device having a wiper blade adapter (10) and having a wiper strip unit (12), wherein the wiper strip unit (12) has at least one fastening recess (14) which, in at least one operating state, forms a positive fit with the wiper blade adapter (10), by means of a rest body (42) which is arranged centrally in the fastening recess (14) and which, in a mounted state, forms a positive fit with a central recess (40) of the wiper blade adapter (10), **characterized in that** the wiper blade adapter (10) has a longitudinal guide unit (24) which is provided for receiving a carrier element (46) with a positive fit.

2. Wiper blade device according to Claim 1, **characterized in that** the wiper blade adapter (10) has at least one fastening means (16) which, in at least one operating state, forms a positive fit with a wind deflector element (20) of the wiper strip unit (12) and prevents a movement of the wiper strip unit (12) relative to the wiper blade adapter (10) in a longitudinal direction (18).

3. Wiper blade device according to Claim 1 or 2, **characterized in that** the wiper strip unit (12) has at least one resiliently elastic carrier element (46) which, in at least one operating state, forms a positive fit with the wiper blade adapter (10).

4. Wiper blade device according to Claim 3, **characterized in that** the positive fit between the carrier element (46) and the wiper blade adapter (10) prevents a movement of the carrier element (46) relative to the wiper blade adapter (10) in the longitudinal direction (18).

5. Wiper blade device according to Claim 4, **characterized in that** the carrier element (46) has at least one detent means (48) which, in at least one operating state, forms a detent connection with the wiper blade adapter (10).

6. Wiper blade device according to one of the preceding claims, **characterized in that** the wiper strip unit (12) has a wind deflector element (20) and a wiper lip (22) which are formed in one piece.

## Revendications

1. Dispositif de balai d'essuie-glace comprenant un adaptateur de balai d'essuie-glace (10) et une unité de raclette de balai d'essuie-glace (12), l'unité de raclette de balai d'essuie-glace (12) présentant au moins un évidement de fixation (14) qui, dans au moins un état de fonctionnement, forme un engagement par correspondance de formes avec l'adaptateur de balai d'essuie-glace (10), avec un corps d'appui (42) qui est disposé centralement dans l'évidement de fixation (14) et qui, dans un état monté, forme un engagement par correspondance de formes avec un évidement central (40) de l'adaptateur de balai d'essuie-glace (10), **caractérisé en ce que** l'adaptateur de balai d'essuie-glace (10) présente une unité de guidage longitudinal (24) qui est prévue pour recevoir par engagement par correspondance de formes un élément de support (46).

2. Dispositif de balai d'essuie-glace selon la revendication 1, **caractérisé en ce que** l'adaptateur de balai d'essuie-glace (10) présente au moins un moyen de fixation (16) qui, dans au moins un état de fonctionnement, forme un engagement par correspondance de formes avec un élément déflecteur de vent (20) de l'unité de raclette de balai d'essuie-glace (12) et qui empêche un déplacement de l'unité de raclette de balai d'essuie-glace (12) par rapport à l'adaptateur de balai d'essuie-glace (10) dans une direction longitudinale (18).

3. Dispositif de balai d'essuie-glace selon la revendication 1 ou 2, **caractérisé en ce que** l'unité de raclette de balai d'essuie-glace (12) présente au moins un élément de support (46) élastique à ressort qui, dans au moins un état de fonctionnement, forme un engagement par correspondance de formes avec l'adaptateur de balai d'essuie-glace (10).

4. Dispositif de balai d'essuie-glace selon la revendication 3, **caractérisé en ce que** l'engagement par correspondance de formes entre l'élément de support (46) et l'adaptateur de balai d'essuie-glace (10) empêche un déplacement de l'élément de support (46) par rapport à l'adaptateur de balai d'essuie-glace (10) dans la direction longitudinale (18).

5. Dispositif de balai d'essuie-glace selon la revendication 4, **caractérisé en ce que** l'élément de support (46) présente au moins un moyen d'encliquetage (48) qui, dans au moins un état de fonctionnement, forme une connexion par encliquetage avec l'adaptateur de balai d'essuie-glace (10).

6. Dispositif de balai d'essuie-glace selon l'une quelconque des revendications précédentes, **caractérisé en ce que** l'unité de raclette de balai d'essuie-glace (12) présente un élément déflecteur de vent (20) et une lèvre de balai d'essuie-glace (22), lesquels sont réalisés d'une seule pièce.
